Europäisches Patentamt

European Patent Office

Office européen des brevets

(11) Publication number: **0 020 168**
A1

# (12) EUROPEAN PATENT APPLICATION

(21) Application number: **80301824.1**

(22) Date of filing: **02.06.80**

(51) Int. Cl.³: **G 03 B 21/43**, G 03 B 27/32

(30) Priority: **04.06.79  GB 7919368**

(43) Date of publication of application: **10.12.80**
**Bulletin 80/25**

(84) Designated Contracting States: **DE FR**

(71) Applicant: **Pontet, Bernard Michael, 5a Crown Parade, Southgate London N14 (GB)**
Applicant: **Raban, Edward William Priaulx, 94 Fairfoot Road, London E3 (GB)**

(72) Inventor: **Pontet, Bernard Michael, 5a Crown Parade, Southgate London N14 (GB)**
Inventor: **Raban, Edward William Priaulx, 94 Fairfoot Road, London E3 (GB)**

(74) Representative: **IRISH, Vivien, Elizabeth, Patent Department National Research Development Corporation P.O. Box 236 Kingsgate House 66-74 Victoria Street, London SW1E 6SL (GB)**

(54) Photographic copying device.

(57) A photographic copying device comprises a film projector (10) and a camera (22) in which the respective films are progressed by respective stepping drive motors (16, 26) the projector and camera being rotatable about vertical axes so that the films can be either parallel or lie at an angle to each other.

## PHOTOGRAPHIC COPYING DEVICE

It is often a requirement to copy a film of one size, e.g. 8mm, on to a different size, e.g. 16mm . Other requirements are special effects without change of film size, e.g. only a part of each frame may be copied, or frames may be repeated or omitted, or the magnification altered. Usually it will be preferable to be able to drive at least the film being copied in both forward and reverse directions.

According to the invention, a photographic copying device comprises photographic projection means;

first stepping drive means to progress a photographic projection film past a projection aperture in the projection means by predetermined steps;

photographic recording means directed towards and at a variable distance from the projection means;

and second stepping drive means to progress a photographic recording film past a recording aperture in the recording means by predetermined steps and in synchronism with the projection means, the projection means and the recording means each being rotatable about an axis in the planes in which their respective films adjacent the apertures lie.

Preferably the projection means and the recording means are directed towards each other along a horizontal axis with the films adjacent the apertures in vertical planes, the projection means and the recording means each being rotatable about a vertical axis so that the film planes can be parallel or can each be rotated through an angle on either side of the parallel position.

In a preferred embodiment the projection means is provided with an integral light source and light directing means arranged so that the source is effectively extended in a direction parallel to the plane of the projection film and to the plane of rotation of the projection means and is positioned close to those planes.

- 2 -

Another preferred feature is that forward and reverse film drive is provided by a reversible drive means comprising three pulley wheels on one axle; first and second belt drive means to connect the two outer pulley wheels to respective first and second film-carrying spools; and third belt drive means to connect the centre pulley wheel to the first stepping drive means; the part of the axle which carries the centre pulley having a multi-start thread whereby rotation of the first stepping drive means in one direction drives the centre pulley wheel along the multi-start thread into driving contact with one outer pulley so that the associated spool is driven in a film-forward direction, and rotation of the first stepping drive means in the other direction drives the centre pulley wheel along the multi-start thread into driving contact with the other outer pulley so that the associated other spool is driven in a film-reverse direction.

Other preferred features are that the distance between the projection means and the recording means is controlled by a third stepping drive means, that the recording means includes a lens system the distance of which from the recording film is controlled by a fourth stepping drive means, and that there are detachable parts allowing the size of film in either the projection means or the recording means to be changed quickly and easily.

The invention will now be described by way of example with reference to the accompanying drawings in which:-

Figure 1 is an elevation and Figure 2 a plan view of a photographic copying device according to the invention;

Figures 3a and 3b illustrate the variation of perspective in the copying device and show the illuminating arrangement in the projection means;

Figure 4 is an enlarged vertical section of the projection means;

Figure 5 is a further enlarged view of the film progression means of either the projection means or the recording means;

Figure 6 is an internal view of the rear of the projection means;

Figure 7 is an exploded view of part of Figure 6, showing the forward and reverse film drive arrangement;

Figure 8 is a diagrammatic representation of the film drive arrangement in the projection means.

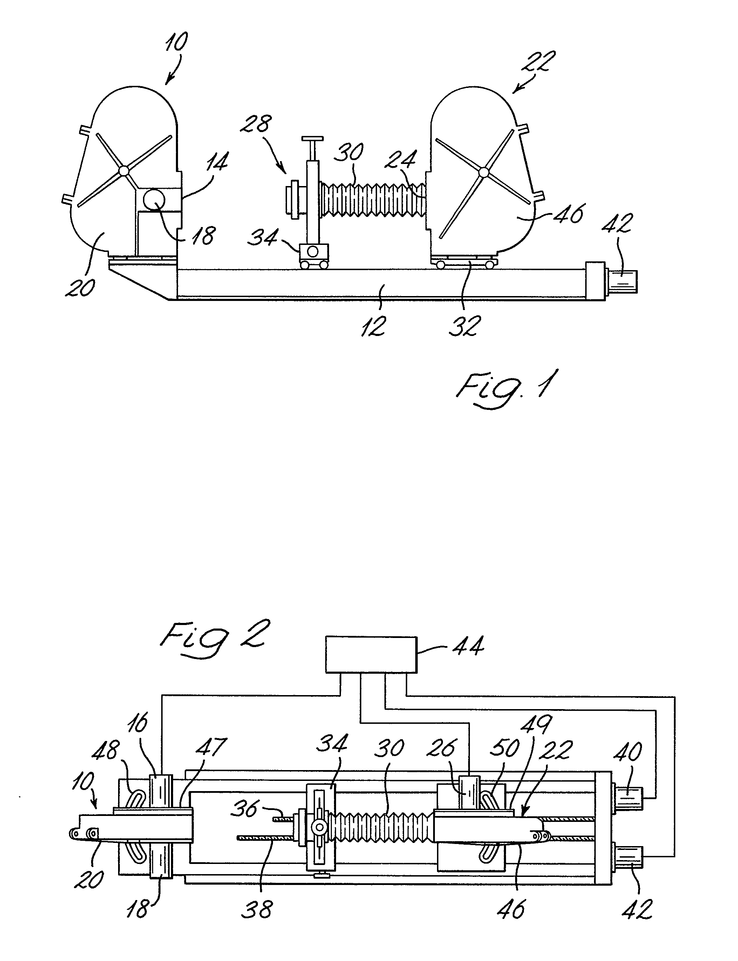

Referring to Figures 1 and 2, a photographic projector 10 is positioned at one end of an optical bench 12. An exposed and developed film (not shown) in the projector is stepped past the projection gate 14 by a first reversible stepping motor 16 and is illuminated by a quartz lamp enclosed in an enclosure 18 which forms part of the hinged side 20 of the projector. Further details will be described below.

A photographic camera 22 is of essentially the same form as the projector; a film to be exposed is stepped through the exposure gate 24 by a second reversible stepping motor 26. The camera lens system 28 is connected to the camera by a flexible bellows 30 and can be finely adjusted both horizontally and vertically by manual controls to allow "panning" and "tilting" across an image. The camera 22 and lens system 28 are carried on respective carraiges 32, 34 carried by ball races and are driven along the optical bench 12 by respective lead screws 36, 38, rotated by third and fourth reversible stepping motors 40, 42.

The four stepping motors 16, 26, 40, 42, are connected to an electronic control circuit 44.

The camera 22 has a hinged side 46, allowing access from the same side of the optical bench 12 as access to the projector via hinged side 20. The motors 16, 26, are carried by bolt-on plates 47, 49 on the rear sides of the camera and projector.

- 4 -

The projector 10 is supported so as to be rotatable in a horizontal plane, the rotation being centred on a position in the vertical plane in which the projection film lies; typically the movement is $\pm$ $17\frac{1}{2}^{o}$ about the central axis of the optical bench 12; a curved slot 48 allows the movement. Similarly, the camera is rotatable about its film plane by $\pm$ $17\frac{1}{2}^{o}$, as indicated by the curved slot 50.

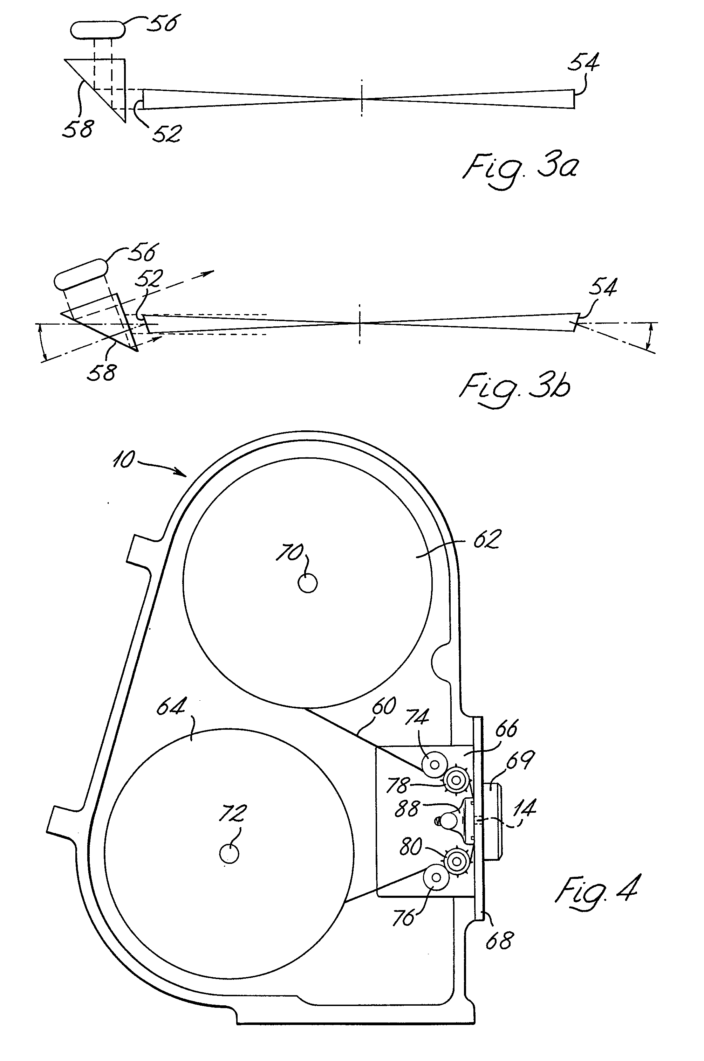

Referring now to Figures 3(a) and 3(b), in Figure 3(a) the projector and camera are in their central positions facing each other along the central axis of the optical bench. The projector film plane 52 and the camera film plane 54 are parallel. In Figure 3(b), the projector is rotatated about the central vertical axis through the film plane so that the film plane 52 is no longer perpendicular to the axis of the optical bench; this causes parts of the image at the camera plane to be out of focus. To maintain a focussed image, the camera is rotated to the same side of the axis. There will be significant distortion of perspective; this facility may be used either to introduce distortion deliberately, or to correct distortion.

Whatever the rotational positions of the projector and the camera, the projection film must be evenly illuminated and the camera must receive adequate light from the projected image. It is a great advantage of apparatus according to the invention in which the light source is integral with the projector and arranged to illuminate the film plane normally, even with the projector rotated, that satisfactory illumination is always maintained. The arrangement for illuminating the projection film is shown in Figures 3(a) and 3(b). Light from the quartz lamp 56 is turned through $90^{o}$ by the prism 58 to illuminate the film plane 52 normally; the quartz lamp and prism are supported by the hinged side 46 of the projector. The exit face of the prism is placed close to, but not in contact with, the projection film. Figure 3(b) shows that when the projector is rotated, the film plane 52 is still illuminated normally and evenly across the surface. The prism is of sufficient width to provide illumination across the width of the projector aperture; the light rays are not in reality deviated at the film plane and the broken line indicates the actual illuminating beam.

A further advantage with such an integral light source is that the film path in the projector is totally enclosed and therefore dustproof.

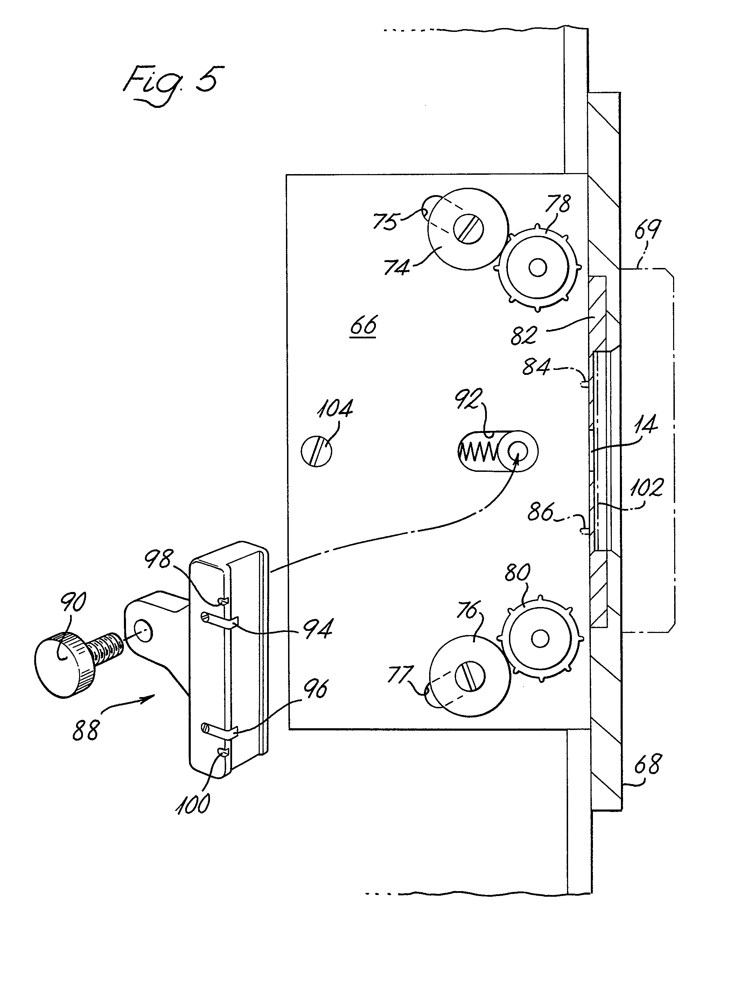

Figures 4 and 5 show the interior of the projector 10. A film 60 passes between upper and lower spools 62, 64 via an arrangement of idler and sprocket wheels carried by a mechanism plate 66 attached to an aperture plate 68 which defines the projection gate 14 and which also carries the projection lens. The spools 62, 64 have solid, blackened flanges which clip together on either side of a roll of film carried by a plastic core 70, 72. This obviates the need for a separate magazine and allows daylight loading of the projector.

Referring now to Figure 5, which shows the mechanism and aperture plates in more detail, the mechanism plate 66 carries two idler wheels 74, 76 and two sprocket wheels 78, 80; the idler wheels 74, 76 are lightly spring loaded towards the respective sprocket wheels 78, 80 as indicated by the slots 75, 77 allowing movement, and sprocket wheel 78 is spring loaded circumferentially to keep the film 60 at the required tension.

The projection aperture 14 is defined by a gate insert 82 on the inner side of the aperture plate 68 which supports two tapered precision location pins 84, 86 above and below the aperture. The pins are positioned to enter the film perforations so that one frame of the film is precisely located with respect to gate 14. The pins both locate the film precisely horizontally, but one pin is a loose fit in the vertical direction to allow for film shrinkage.

The mechanism plate 66 carries a pressure plate 88, held by a thumb wheel 90 and movable in a slot 92 by a solenoid (not illustrated in this Figure) which is controlled by the circuit 44 to operate in appropriate sequence with the stepping motor controlling the sprocket wheels. In operation, a frame of the film is approximately positioned in front of the aperture 14 by the sprocket wheels with the pressure plate 88 retracted by the solenoid then the solenoid allows the pressure plate to move forward under spring pressure so that the film is precisely located by pins 84, 86, the spring-loaded wheels 74, 76 and sprocket 78 allowing sufficient movement to keep the film in tension but to prevent tearing. To change the frame, the solenoid retracts the pressure plate and the film is pulled off the pins 84, 86 by upper and lower lips, 94, 96 attached to the pressure plate, the stepping motor 16 steps the film to the next required frame, and the solenoid releases the pressure plate to locate the film on the pins 84, 86 once more. The pins enter corresponding recesses 98, 100 in the pressure plate 88.

The film transport and location system in the camera is identical, the only difference being the provision of a shutter carried by the gate insert 82 and shown dotted as reference 102 in Figure 5.

In both projector and camera, the mechanism and aperture plates are attached to the body of the respective devices by securing screws such as 104.

It is a great advantage of the present invention that the film size can be changed easily by removing the gate insert 82, the pressure plate 88 and the sprocket wheels 78, 80 and replacing them by a gate insert, pressure plate and sprocket wheels suitable for the new film size.

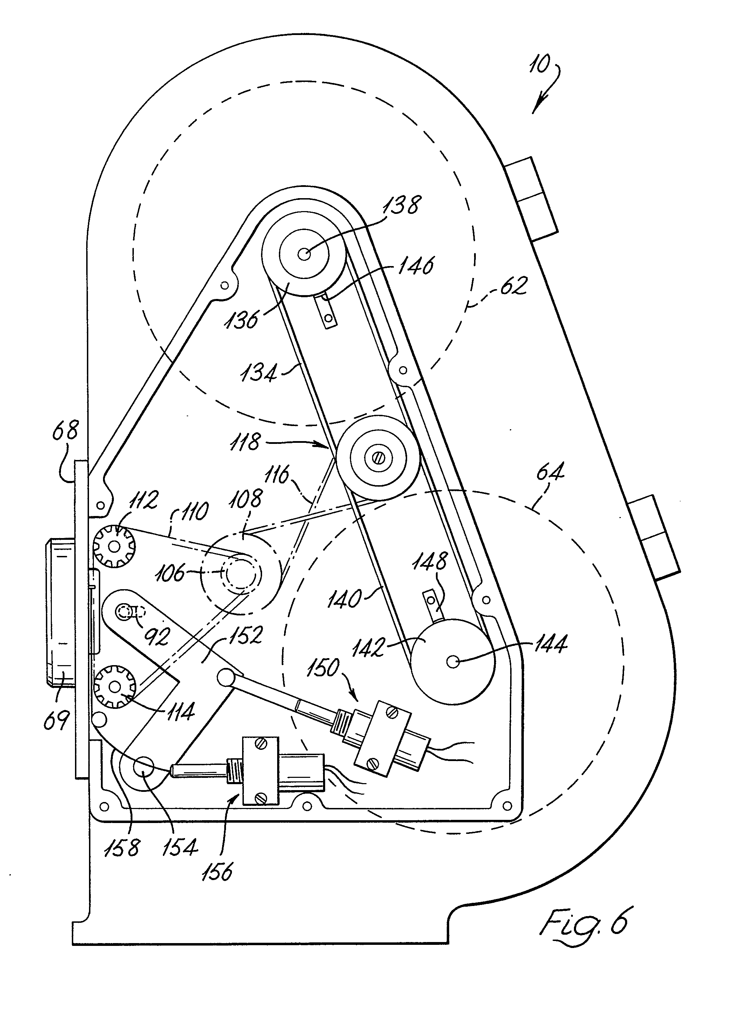

Both the projection film and the recording film may need to be run in both the forward and reverse directions to a particular frame, and the film drive must therefore be accurate. The film drive arrangement of the projection means is shown in Figures 6, 7 and 8; the camera 22 is provided with an identical mechanism.

Figure 6 is a view of the projection means 10 when the bolt-on plate 47 (see Figure 2) carrying the first stepping drive motor 16 is removed. The motor 16 carries two coaxial drive pulleys 106,

- 7 -

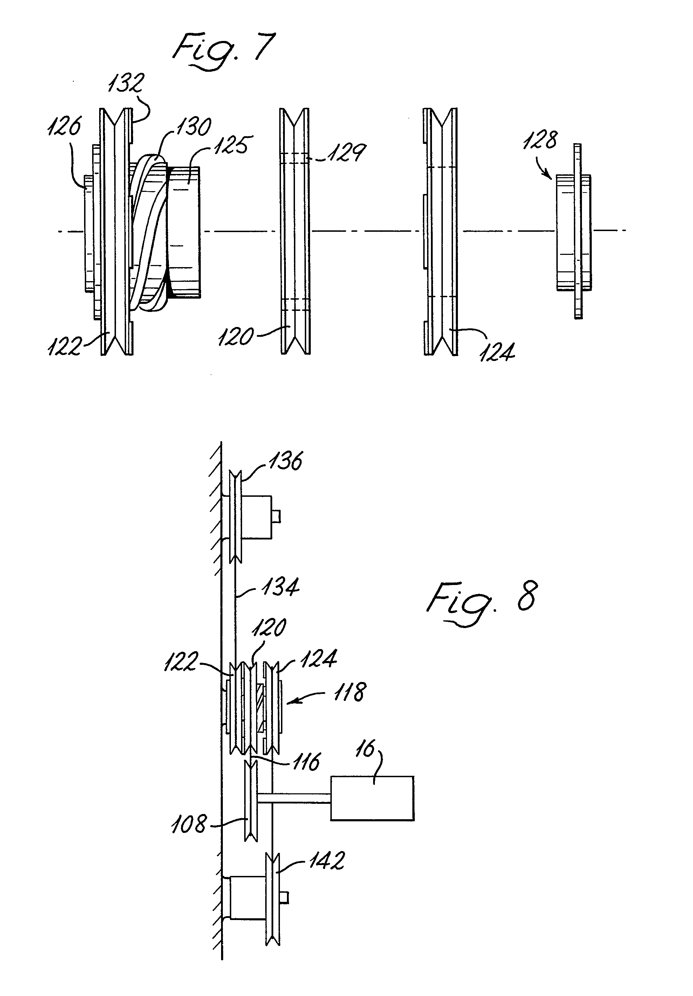

108, shown dotted in their position when the plate 47 is present. The smaller diameter pulley 106 carries a drive belt 110 which passes round two sprocket drives 112, 114 attached to the sprocket wheels 78, 80 (not shown). The larger diameter pulley 108 carries a drive belt 116 which passes to a reversible drive means indicated generally as reference 118 and illustrated in detail in Figures 7 and 8. The drive belt 116 passes to the centre pulley wheel 120 which has identical pulley wheels 122, 124 one on either side, all three pulleys running on the same axle 125 and being retained by ball bearings 126, 128 which are spaced so that the centre pulley 120 is allowed some axial movement. The outer pulleys 122, 124 have clean bores but the centre pulley 120 has a four-start thread 129 which co-operates with a four-start thread 130 on the central part of the axle 124. The inner faces of the outer pulleys 122, 124 carry clutch plates 132 in the form of four spaced cork inserts, two of which are illustrated, and the centre pulley has indentations on both its surfaces at the corresponding radius.

When the drive belt 116 drives pulley 120 in the forward direction, the pulley moves along the threaded axle into contact with one of the outer pulleys, the clutch plates 132 and indentations on pulley 120 giving driving contact, and outer pulley, say pulley 124, is driven in the forward direction. If the drive belt reverses direction, the pulley 120 is driven along the threaded axle into contact with pulley 122 which is driven in the reverse direction.

Referring now to Figures 6 and 8, pulley 122 is connected by a drive belt 134 to a pulley 136 on the axle 138 of the upper film spool 62 and pulley 124 is connected by a belt drive 140 to a pulley 142 on the axle 144 of the lower film spool 64. When pulley 124 is driven forwards, the lower spool 64 is driven to wind film on, the belt 110 driving the sprockets 78, 80 simultaneously, and the pulley 122 running free so that the upper spool also runs free except for a light braking action provided by a spring strip 146. Similarly, when pulley 122 is driven, the upper film spool 62 is driven and the film direction is reversed, the lower spool 64 being lightly braked by spring strip 148.

It has been found that the illustrated drive arrangement allows accurate movement of the film in the forward and reverse directions so that a precise frame can be located and projected by the projection means even after a fast run of the film. The contact between the centre and either of the outer pulleys is sufficiently good to give drive in the required direction, but there is some slippage to allow for the different take-up ratios of a full and an empty film spool.

Other features shown in Figure 6 are a solenoid 150 connected to an "L" shaped connection 152 pivoted at 154 which operates the pressure plate (reference 88 in Figure 5), and a solenoid 156 connected by a cable 158 to the shutter (reference 102 in Figure 5). The two solenoids are connected to the control circuit 44.

It has already been stated that the apparatus is operated by means of four stepping motors connected to a control circuit 44. Preferably this circuit incorporates a microprocessor which is programmable to carry out a variety of effects and which provides a display of useful information, such as the frame numbers of the projection and recording films adjacent the respective film gates. A microprocessor allows programmes such as stretch-printing (i.e. a ratio of frames projected to frames printed which differs from 1:1); fast run to a particular frame number without exposure of the film; enlargement or reduction of the copied frame; automatic focus and automatic zoom.

- 9 -

CLAIMS

1.    A photographic copying device characterised by comprising photographic projection means (10);

first stepping drive means (16) to progress a photographic projection film (60) past a projection aperture (14) in the projection means by predetermined steps;

photographic recording means (22) directed towards and at a variable distance from the projection means;

and second stepping drive means (26) to progress a photographic recording film past a recording aperture in the recording means by predetermined steps and in synchronism with the projection means, the projection means and the recording means each being rotatable about an axis in the planes in which their respective films adjacent the apertures lie.

2.    A photographic copying device according to Claim 1 in which the projection means and the recording means are directed towards each other along a horizontal axis with the films adjacent the apertures in vertical planes, the projection means and the recording means each being rotatable about a vertical axis so that the film planes can be parallel or can each be rotated through an angle on either side of the parallel position.

3.    A photographic copying device according to Claim 2 in which the projection means and the recording means are each rotatable through an angle of $\pm$ $17\frac{1}{2}^{O}$ from the position in which the film planes are parallel.

4.    A photographic copying device according to any preceding claim in which the projection means is provided with an integral light source (56) and light directing means (58) arranged so that the source is effectively extended in a direction parallel to the plane of the projection film and to the plane of rotation of the projection means and is positioned close to those planes.

5. A photographic copying device according to any one of claims 2, 3 and 4 in which the integral light source (56) is horizontally spaced from said horizontal axis and the light directing means is a prism (58) which directs light to illuminate the projection aperture in a normal direction.

6. A photographic copying device according to any preceding claim in which the distance between the projection means (10) and the recording means (22) is controlled by a third stepping drive means (40).

7. A photographic copying device according to Claim 6 in which the recording means includes a lens system the distance of which from the recording film is controlled by a fourth stepping drive means (42).

8. A photographic device which may be a projection means (10) or a recording means in which a photographic film (60) is stepped past an aperture (14) by predetermined steps by stepping drive means (16) and which is provided with reversible drive means (118) to drive the film in the forward and the reverse directions, the drive means comprising three pulley wheels (120, 122, 124) on one axle (125); first and second belt drive means (134, 140) to connect the two outer pulley wheels (122, 124) to respective first and second film-carrying spools (62, 64); and third belt drive means (116) to connect the centre pulley wheel (120) to the stepping drive means (16); the part of the axle which carries the centre pulley having a multi-start thread (130) whereby rotation of the stepping drive means in one direction drives the centre pulley wheel along the multi-start thread into driving contact with one outer pulley so that the associated spool is driven in a film-forward direction, and rotation of the stepping drive means in the other direction drives the centre pulley wheel along the multi-start thread into driving contact with the other outer pulley so that the associated other spool is driven in a film-reverse direction.

- 11 -

9. A photographic device according to Claim 8 in which the photographic device is provided with a film transport device consisting of two spaced sprocket wheels (78, 80) controlled by the associated first or second stepping drive means (16, 26); two idler wheels (74, 76) co-operating to maintain the film on the sprocket wheels; precision location means (84, 86) to position a frame of the film accurately in two orthogonal directions with respect to the aperture; and reciprocation means (88) to move the film into and out of contact with the precision location means; at least one sprocket wheel being spring loaded so as to maintain the film at a required tension while allowing it to be precisely located.

10. A photographic device according to Claim 9 further comprising a detachable gate insert (82) in which the two sprocket wheels (78, 80) and the reciprocation means (88) are also detachable, the gate insert, sprocket wheels and the reciprocation means being selected in accordance with the size of the film.

1/5

Fig. 1

Fig 2

0020168

2/5

Fig. 3a

Fig. 3b

Fig. 4

0020168

Fig. 5

*Fig.6*

Fig. 7

Fig. 8

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | GB - A - 5317 AD 1914 (J. BECKER)<br>* Figures 1-3 * | 1-3 | G 03 B 21/43<br>27/32 |
| | DE - C - 624 862 (F. ZACH)<br>* Figures 2,3 * | 1-3 | |
| | DE - C - 876 195 (G. FRISCHKORN)<br>* Figures 1,2 * | 1-3 | |
| | US - A - 3 846 022 (J. KURHI)<br>* Abstract; figure 8 * | 1 | TECHNICAL FIELDS SEARCHED (Int.Cl. 3)<br><br>G 03 B 1/40<br>21/43<br>21/44<br>27/32<br>27/46<br>27/68<br>37/06 |
| | US - A - 3 689 149 (J.S. LIVINGOOD) | 1 | |
| | * Column 3, lines 3-6 * | | |
| A | FR - A - 2 242 707 (ZELACOLOR SYSTEMS ESTABLISHMENT)<br>* Claim 8; figure 3 * | 8 | |
| A | US - A - 4 014 112 (R.L. CHRISTOPHERSON et al.)<br>* Abstract * | 1,8 | CATEGORY OF CITED DOCUMENTS |
| A | DE - A - 2 542 695 (E. LIESEGANG)<br>* Figures 2,3 * | 8 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | ./. | | &: member of the same patent family, corresponding document |

| The present search report has been drawn up for all claims | | |
|---|---|---|
| Place of search<br>The Hague | Date of completion of the search<br>28-08-1980 | Examiner<br>HILTNER |

EPO Form 1503.1  06.78

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | <u>DE - B - 1 188 936</u> (EUGEN BAUER GmbH)<br><br>* Claim 1; figure 2 * | 8 | |
| | ---- | | |
| | | | **TECHNICAL FIELDS SEARCHED (Int. Cl. ³)** |